# EUROPÄISCHE PATENTANMELDUNG

(11) **EP 1 092 951 A2**
(43) Veröffentlichungstag der Anmeldung: **18.04.2001**
(21) Anmeldenummer: 00118046.2
(22) Anmeldetag: 23.08.2000
(51) Int. Cl.: G01C 21/36

(54) **Navigationssystem mit erweiterter Anzeigefunktion**

(30) Priorität: 20.09.1999 DE 19944938
(71) Anmelder: Mannesmann VDO Aktiengesellschaft, 60388 Frankfurt am Main (DE)
(72) Erfinder: Schilling, Uwe, Dr., 35606 Solms (DE)
(74) Vertreter: Rassler, Andrea, Dipl.-Phys.

(57) **Zusammenfassung**

Die Erfindung betrifft Navigationssysteme für Kraftfahrzeuge, bei denen Zielführungsinformationen über einen Monitor (3) ausgeben werden. Datensätze, die Landkartendaten enthalten, sind in einem Speicherelement (5) abgelegt. Erfindungsgemäß ist vorgesehen, daß in dem Speicherelement (5) zu einem Datensatz der Landkartendaten gehörende Informationen zu Verkehrsbeschränkungen abgelegt sind und weiterhin die für die ermittelte Fahrzeugposition geltenden Verkehrsbeschränkungen auf dem Monitor (3) anzeigbar sind. Weiterhin ist in einer speziellen Ausführungsform vorgesehen, daß zeitliche Beschränkungen von Verkehrsbeschränkungen ebenfalls abgespeichert werden und nur die zur aktuellen Zeit gültigen Verkehrsbeschränkungen angezeigt werden.

## Beschreibung

Die Erfindung betrifft ein Navigationssystem eines Kraftfahrzeuges, das eine zentrale Recheneinheit, die mit einer Eingabe- und einer Ausgabeeinheit, Mitteln zur Positionsbestimmung sowie einem Speicherelement für Landkartendaten verbunden ist, und Mittel zur Zuordnung einer ermittelten Fahrzeugposition zu einem im Speicherelement abgelegten Datensatz der Landkartendaten enthält.

Ein solches Navigationssystem ist beispielsweise aus der EP 0 363 396 B1 bekannt. Navigationssysteme in Kraftfahrzeugen erfüllen mehrere Funktionen. Eine erste Funktion ist die Berechnung einer Route zwischen einem Startort und einem Zielort, wobei in der Regel zwischen der schnellsten und der kürzesten Route gewählt werden kann. Nach Durchführung der Routenberechnung ist es Aufgabe des Navigationssystems den Fahrer des Kraftfahrzeuges zum Zielort zu leiten. Hierzu ist es erforderlich, daß eine ständige Positionsbestimmung des Kraftfahrzeuges durchgeführt wird und die so ermittelte Kraftfahrzeugposition mit den im Navigationssystem abgespeicherten Landkartendaten abgeglichen wird. Die Ausgabe der Zielführungsinformation erfolgt dabei über eine Ausgabeeinheit, wobei in der Regel die Informationen sowohl in optischer als auch akustischer Weise ausgegeben werden. Durch ein solches bekanntes Navigationssystem wird ein Fahrer bei Fahrten in einem ihm unbekannten Gebiet deutlich entlastet. Insbesondere ist er nicht gezwungen, ständig auf am Straßenrand angebrachte Schilder mit Richtungshinweisen zu achten. Dennoch muß der Fahrer weiterhin auf eine teilweise große Anzahl von sonstigen Verkehrsschildern mit Ge- und Verboten achten. Verkehrsschilder am Straßenrand können zum einen aber leicht übersehen werden, zum anderen kann der Fahrer insbesondere bei häufig wechselnder Beschilderung im Unklaren darüber sein, welche Beschränkungen auf dem vom ihm befahrenen Streckenabschnitt gerade aktuell sind. Dies gilt beispielsweise besonders für Geschwindigkeitsbeschränkungen. Gerade bei Überlandfahrten mit wechselnden Geschwindigkeitsbeschränkungen kann dieses Problem verstärkt auftreten.

Aus der WO 97/35196 sind elektronische Verkehrszeichen bekannt. Das elektronische Verkehrszeichen weist einen Transmitter auf, der die Bedeutung des Verkehrszeichens an ein vorbeifahrendes Kraftfahrzeug übermittelt. In dem Kraftfahrzeug ist ein entsprechender Empfänger angeordnet, der die vom elektronischen Verkehrszeichen übermittelten Daten empfängt, verarbeitet und über eine Anzeigeeinheit anzeigt. Der Fahrer kann sich somit stets über die auf dem gerade befahrenen Streckenabschnitt bestehenden Verkehrsbeschränkungen informieren. Nachteilig hierbei sind jedoch die hohen Kosten des Systems, da jedes Verkehrszeichen mit einer entsprechenden elektronischen Ausrüstung versehen werden muß. Zudem ist auch im Kraftfahrzeug selbst ein zusätzlicher Empfänger sowie eine Anzeigeeinheit erforderlich.

Aufgabe der Erfindung ist es, ein eingangs beschriebenes Navigationssystem derart abzuwandeln, daß neben den Zielführungsinformationen auch weitere wichtige Informationen zur Fahrstrecke anzeigen und dadurch den Fahrer des Fahrzeugs entlasten kann.

Die Aufgabe wird bei einem gattungsgemäßen Navigationssystem dadurch gelöst, daß in dem Speicherelement zu einem Datensatz der Landkartendaten gehörende Informationen zu Verkehrsbeschränkungen abgelegt sind und für die ermittelte Fahrzeugposition geltende Verkehrsbeschränkungen auf der Anzeigeeinheit anzeigbar sind.

Nicht als Verkehrsbeschränkungen im Sinne der Erfindung werden die komplette Sperrung von Straßen für den Kraftfahrzeugverkehr oder Einbahnstraßenregelungen angesehen, da hierdurch keine eigentliche Beschränkung erfolgt, sondern diese Straßen ganz oder in bestimmten Fahrtrichtungen für den Kraftfahrzeugverkehr nicht zur Verfügung stehen.

Vorzugsweise handelt es sich bei den Verkehrsbeschränkungen um Geschwindigkeitsbeschränkungen, Höhen-, Breiten- oder Längenbeschränkungen, Gewichtsbeschränkungen und/oder Verkehrsbeschränkungen für bestimmte Fahrzeugarten. Durch die Anzeige dieser Verkehrsbeschränkungen im Fahrzeug hat der Fahrer des Fahrzeugs die Möglichkeit sich jederzeit über die aktuell geltenden Verkehrsbeschränkungen durch einen Blick auf die Ausgabeeinheit des Navigationssystem zu informieren.

Beispielsweise kann es sich bei den Geschwindigkeitsbeschränkungen um Beschränkungen auf 80 km/h oder 60 km/h auf Landstraße oder 30 km/h in verkehrsberuhigten Zonen innerhalb geschlossener Ortschaften handeln. Gerade bei Geschwindigkeitsbeschränkungen auf 30 km/h in verkehrsberuhigten Zonen innerhalb geschlossener Ortschaften erfolgt ein Hinweis auf die Geschwindigkeitsbeschränkung in der Regel nur beim Einfahren in diese Zone. Beim Ausfahren aus dieser Zone wird die Verkehrsbeschränkung dann durch ein Hinweisschild wieder aufgehoben. Fährt ein Fahrer jedoch längere Zeit innerhalb einer solchen verkehrsberuhigten Zone, so kann es leicht vorkommen, daß er sich nicht mehr im Klaren darüber ist, welche Geschwindigkeitsbeschränkung gerade aktuell gilt. Dies gilt beispielweise dann, wenn er das Fahrzeug zwischenzeitlich verlassen hat, um beispielsweise Einkäufe vorzunehmen. Ähnlich verhält es sich bei Überlandfahrten, bei denen häufig Geschwindigkeitsbeschränkungen wechseln oder über einen längeren Streckenabschnitt gelten, wobei entsprechende Hinweisschilder aber nur in größeren Abständen angebracht sind. Auch hier kann die Situation auftreten, daß der Fahrer sich nicht über die aktuell geltende Höchstgeschwindigkeit im Klaren ist.

Mit dem erfindungsgemäßen Navigationssystem, bei dem die aktuell zulässige Höchsgeschwindigkeit auf der Ausgabeeinheit stets angezeigt wird, ist der Fahrer zu jedem Zeitpunkt in der Lage sich über die aktuell geltende Geschwindigkeitsbeschränkung zu informieren. Hierdurch wird eine deutliche Erhöhung der Verkehrssicherheit erreicht.

Zusätzlich zu der Anzeige der durch Straßenschilder vorgegebenen Geschwindigkeitsbeschränkungen ist es in einer speziellen Ausführungsform auch möglich, daß generelle Geschwindigkeitsbeschränkungen für einen bestimmten Straßentyp auf der Ausgabeeinheit dargestellt werden. So ist es beispielsweise möglich, bei Befahren einer Landstraße außerhalb geschlossener Ortschaften ohne spezielle Geschwindigkeitsbeschränkungen die für diesen Straßentyp in Deutschland generell geltende Geschwindigkeitsbeschränkung von 100 km/h auf der Ausgabeeinheit anzuzeigen. Das gleiche gilt für eine generelle Geschwindigkeitsbeschränkung innerhalb geschlossener Ortschaften von beispielsweise 50 km/h in der Bundesrepublik Deutschland. Gerade in Randbezirken von geschlossenen Ortschaften kann daher die manchmal auftretende Unsicherheit aufgehoben werden, ob man sich noch innerhalb oder bereits außerhalb der geschlossenen Ortschaft befindet.

Neben Geschwindigkeitsbeschränkungen kann es sich bei den anzeigbaren Verkehrsbeschränkungen insbesondere auch um solche für bestimmte Fahrzeugarten handeln. Hierbei kann es sich beispielsweise um die Anzeige eines Überholverbotes für LKW, einer Geschwindigkeitsbeschränkung für LKW oder eines Verbotes für Gefahrguttransporte handeln. Da aber beispielsweise die Anzeige von Verkehrsbeschränkungen für LKW einen PKW-Fahrer nicht interessieren, ist in einer besonderen Ausführungsform vorgesehen, daß die Fahrzeugart im Navigationssystem wählbar ist und nur die für die gewählte Fahrzeugart geltenden Verkehrsbeschränkungen angezeigt werden. Somit wird durch das Navigationssystem eine Reduzierung der Informationen auf die für den Fahrer eines bestimmten Fahrzeuges notwendigen Informationen erreicht.

In manchen Fällen kommt es vor, daß bestimmte Verkehrsbeschränkungen zeitabhängig sind. Hierzu gehören beispielsweise ein Nachtfahrverbot für LKW auf einer bestimmten Strecke, eine Geschwindigkeitsbeschränkung auf 30 km/h in der Zeit von 7.00 bis 14.00 Uhr im Bereich vor einer Schule, eine Geschwindigkeitsbeschränkung oder ein Überholverbot für LKW auf Autobahnen während der Zeiten des Berufsverkehrs, beispielsweise von 6.00 bis 9.00 Uhr und von 15.00 bis 19.00 Uhr, oder eine nächtliche Geschwindigkeitsbeschränkung zur Lärmminderung. Um auch in solchen Fällen eine zuverlässige Information des Fahrers sicherzustellen, ist in einer speziellen Ausführungsform der Erfindung vorgesehen, daß bei zeitabhängigen Verkehrsbeschränkungen die Information über die zeitliche Geltungsdauer der Verkehrsbeschränkung im Speicherelement mit abgelegt ist. Durch Vergleich des Zeitraumes für die Geschwindigkeitsbeschränkungen mit der aktuellen Uhrzeit, die über eine Uhr im Navigationssystem bestimmt wird, kann entschieden werden, ob eine Verkehrsbeschränkung zur Zeit aktuell ist und angezeigt werden soll. Eine solche Prüfung und Entscheidung wird üblicherweise in der Recheneinheit des Navigationssystems softwaremäßig durchgeführt.

Durch Änderung der Verkehrsbschränkungen für bestimmte Streckenabschnitte werden die im Speicherelement des Navigationssystems abgelegten entsprechenden Informationen mit der Zeit teilweise nicht mehr aktuell sein. Daher ist ein regelmäßiges Erneuern der Informationen erforderlich. Dies kann einerseits durch Austausch des Speicherelements oder durch Überspielen von aktuellen Informationen auf das Speicherelement erfolgen.

In besonders vorteilhafter Weise kann die Aktualisierung der auf dem Speicherelement abgespeicherten Verkehrsbeschränkungen dadurch erfolgen, daß die Daten von einem Zentralrechner heruntergeladen werden. Hierzu können vorteilhaft Mobilfunknetze eingesetzt werden. Das Navigationssystem ist dazu mit einem Mobiltelefon verbindbar und die Informationen über die Verkehrsbeschränkungen sind über das Mobiltelefon aktualisierbar. Beispielsweise kann durch Wahl einer bestimmten Telefonnummer der aktualisierte Datensatz mit Verkehrsbeschränkungen von einem Zentralrechner, der in einer stationären Sendestation des Mobilfunknetzes vorhanden ist, übermittelt werden. Hierbei können alle Verkehrsbeschränkungen zu einem bestimmten Gebiet überspielt werden oder auch nur solche Verkehrsbeschränkungen, die sich geändert haben, neu hinzugekommen sind oder aufgehoben worden sind. Die Verbindung zwischen dem Navigationssystem und dem Mobiltelefon kann dabei über ein Kabel, insbesondere jedoch auch kabellos erfolgen.

In einer besonderen Ausführungform ist vorgesehen, daß über das Mobiltelefon neben den Informationen zu den Verkehrsbeschränkungen auch die Landkartendaten von einem Zentralrechner einer stätionären Sendestation des Mobilfunknetzes abrufbar und in das Speicherelement übertragbar sind. Dieses Verfahren hat den Vorteil, daß im Kraftfahrzeug selbst nur ein Speicherelement vergleichsweise geringer Speichergröße vorhanden sein muß und insbesondere auch stets aktuelle Landkartendaten zur Verfügung stehen.

Die im Speicherelement abgespeicherten Informationen zu Verkehrsbeschränkungen können jedoch nicht nur alleine für die Anzeige auf einer Anzeigeeinheit verwendet werden, sondern vielmehr auch bei der Routenberechnung berücksichtigt werden. Hierdurch kann beispielsweise erreicht werden, daß bei der Routenberechnung innerstädtische Bereiche mit einer Geschwindigkeitsbeschränkung auf 30 km/h gemieden werden. Vor allen Dingen können hierbei auch zeitlich befristete Geschwindigkeitsbeschränkungen ebenso berücksichtigt werden wie beispielsweise ein Nachtfahrverbot für LKW auf einer bestimmten Strecke.

Die Erfindung wird nachfolgend anhand eines Ausführungsbeispiel in der Zeichnung näher erläutert.

Es zeigen:
- Fig. 1:: die Komponenten eines Navigationssystem,
- Fig. 2:: eine optische Ausgabeeinheit mit einigen darstellbaren Informationen,
- Fig. 3:: die Verbindung eines in ein Radiogerät integrierten Navigationsgerätes mit einem Mobilfunkgerät.

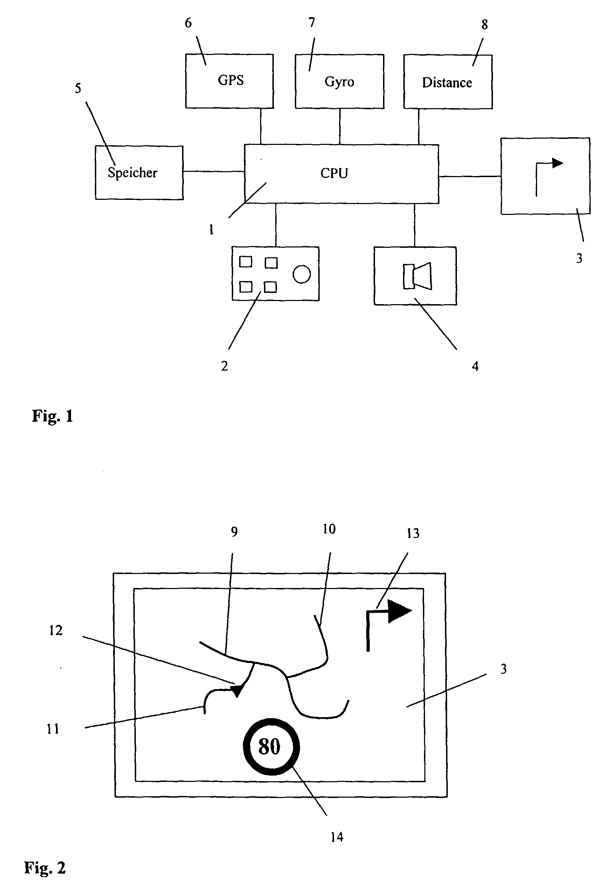

In Figur 1 sind die wesentlichen Komponenten eines Navigationssystems dargestellt. Zentraler Bestandteil ist die Recheneinheit 1, die auch die zu ihrem Betrieb erforderlichen Speicherelemente (RAM / ROM) enthält. Mit der Recheneinheit 1 ist eine Eingabeeinheit 2 verbunden. Über die Eingabeeinheit 2 können verschiedene Einstellungen des Navigationssystems vorgenommen werden und ein Zielort und gegebenenfalls auch der Startort gewählt werden. Die Eingabe des Zielortes ist dabei beispielsweise durch Eingabe des vollständigen Namens des Zielortes oder auch durch Auswahl aus einer Liste, die auf einer optischen Ausgabeeinheit (Monitor) 3 dargestellt wird, möglich. Auf dem Monitor 3 werden auch die Zielführungsinformationen ausgegeben. Darüber hinaus können die Zielführungsinformationen auch über eine akustische Ausgabeeinheit 4 ausgegeben werden. Die Ausgabe über eine akustische Ausgabeeinheit 4 hat den Vorteil, daß der Fahrer weniger vom aktuellen Verkehrsgeschehen abgelenkt wird. In einem Speicherelement 5, das mit der zentralen Recheneinheit 1 verbunden ist, sind die Landkartendaten in Form von Datensätzen abgelegt. Erfindungsgemäß sind in dem Speicherelement 5 zusätzlich Informationen über Verkehrsbeschränkungen abgelegt und den Datensätzen zugeordnet. Zur Bestimmung der aktuellen Fahrzeugposition weist das Navigationssystem einen GPS-Empfänger 6 auf, der zum Empfang von Navigationssignalen von GPS-Satelliten ausgelegt ist. Da diese GPS-Signale aber beispielsweise im innerstädtischen Bereich nicht immer empfangbar sind, weist das Navigationssystem zur Durchführung einer Koppelnavigation zudem einen Richtungssensor 7 und einen Wegstreckensensor 8 auf. Die Signale des GPS-Empfängers, des Wegstreckensensors und des Richtungssensors werden in der zentralen Recheneinheit verarbeitet. Die aus diesen Signalen ermittelte Fahrzeugposition wird über das bekannte map-matching mit den Straßenkartendaten abgeglichen. Die so gewonnene Zielführungsinformation wird über den Monitor 3 schließlich ausgegeben.

Der Monitor 3 ist in der Figur 2 näher dargestellt. Er beinhaltet verschiedene Bereiche zur Anzeige unterschiedlicher Informationen. Beispielsweise wird auf dem Monitor 3 eine Landkarte mit verschiedenen Straßen 9, 10, 11 dargestellt. Die über map-matching mit den Landkartendaten abgeglichene Fahrzeugposition wird durch einen Cursor 12 innerhalb der Landkartendarstellung dargestellt. Weiterhin wird dem Fahrer auf dem Monitor 3 durch eine Pfeildarstellung die Fahrtrichtung dargestellt. Bei der in der Figur 2 dargestellten Pfeildarstellung ist beispielsweise ein Rechtsabbiegen an der nächsten Kreuzung vorgesehen. Erfindungsgemäß wird darüber hinaus auf dem Monitor 3 in Form eines Verkehrszeichens 14 die auf dem gerade befahrenen Streckenabschnitt geltende Geschwindigkeitsbeschränkung dargestellt. Der Fahrer hat somit die Möglichkeit sich jederzeit über die geltende Geschwindigkeitsbeschränkung zu informieren.

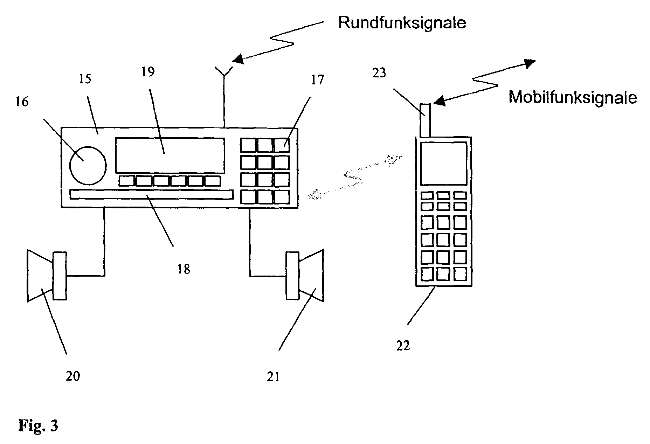

In Figur 3 ist eine spezielle Ausgestaltung des Navigationssystems dargestellt, das hier in ein Rundfunkgerät 15 integriert ist. Das Rundfunkgerät 15 weist Bedienelemente 16, 17 auf, wobei die Bedienelemente 17 beispielsweise zur Eingabe eines Zielortes für das Navigationssystem genutzt werden können. Das Rundfunkgerät 15 weist weiterhin einen Schacht 18 mit einem Lesegerät auf, in den ein Speicherelement mit den Landkartendaten und den zu den Landkartendaten zugeordneten Verkehrsbeschränkungen eingeschoben werden kann. Hierbei kann es sich beispielsweise um eine CD-ROM handeln, auf der die Landkartendaten und die Informationen zu Verkehrsbeschränkungen abgespeichert sind. Das Rundfunkgerät weist weiterhin ein Display 19 auf, über das die Zielführungsinformationen optisch ausgegeben werden können. Zudem ist eine akustische Ausgabe der Zielführungsinformationen über die Lautsprecher 20, 21 möglich.

Über eine nicht dargestellte, im Rundfunkgerät 15 integrierte Sende/Empfangseinrichtung steht das Rundfunkgerät 15 in Verbindung zu einem Mobilfunktelefon 22. Das Mobilfunktelefon 22 weist ebenfalls eine entsprechende Sende-/Empfangseinrichtung auf, die zur Datenübertragung zwischen dem Mobiltelefon und dem Rundfunkgerät geeignet ist. Hierbei kann es sich insbesondere um eine Infrarotverbindung oder eine Funkverbindung, beispielsweise mit einer Sende-/Empfangseinrichtung nach dem BLUETOOTH-Verfahren, handeln. Über eine Antenne 23 empfängt das Mobiltelefon 22 Mobilfunksignale von einer stationären Sende-/Empfangseinrichtung eines Mobilfunknetzes. In der stationären Sendeeinrichtung des Mobilfunknetzes sind aktualisierte Informationen zu Verkehrsbeschränkungen abgelegt, die über die Mobilfunksignale zum Mobilfunktelefon 22 und von dort zu dem in dem Rundfunkgerät 15 integrierten Navigationssystem über eine kabellose Verbindung übertragen wird. Die aktualisierten Daten werden dann auf einem Speicherelement zusammen mit der Zuordnung zu einem bestimmten Streckenabschnitt (Datensatz der Landkartendaten) abgelegt. Diese Funktionen werden von der zentralen Recheneinheit des Navigationssystems gesteuert.

Die Daten mit den Verkehrsbeschränkungen können auf demselben oder einem anderen Speicherelement wie die Landkartendaten abgelegt werden. Beispielsweise ist es möglich, als Speicherelement eine beschreibbare CD-ROM vorzusehen, so daß sowohl die Landkartendaten als auch die aktuellen Daten zu Verkehrsbeschränkungen auf einem Speicherelement großer Speicherkapazität abgelegt werden können. Da Vorrichtungen zum Beschreiben von CD-ROMs z. Z. noch vergleichsweise groß und teuer und damit schlecht in Rundfunkgerät integrierbar sind, können die Verkehrsbeschränkungen auch in einem weiteren Festwertspeicher des Navigationssystem (RAM oder Chipkarte mit zugehörigem Lesegerät) abgelegt werden, wobei jedoch sichergestellt werden muß, daß die Verkehrsbeschränkungen dem richtigen Datensatz mit den Landkartendaten zugeordnet wird. Eine solche Zuordnung erfolgt jedoch rein softwaremäßig.

Die Erfindung wurde anhand eines Ausführungsbeispiels beschrieben. Weitere Ausgestaltungen sind dem Fachmann geläufig. Beispielweise kann auf ein Speicherelement großer Speicherdichte wie es eine CD-Rom darstellt verzichtet werden und die Landkartendaten können ebenfalls über das Mobilfunkgerät in einen Festwertspeicher geringerer Speichergröße im Radiogerät abgelegt werden. Darüber hinaus ist es möglich, daß die Fahrtroute von einem Rechner innerhalb des Mobilfunknetzes ermittelt wird und über das Mobilfunknetz an das Navigationssystem übermittelt wird. Entsprechendes gilt dann auch für die Informationen über die Verkehrsbeschränkungen. Hierbei wird im Navigationsgerät ein besonders kleines Speicherelement ausreichend sein und insbesondere werden stets aktuelle Daten verwendet.

## Patentansprüche

1. Navigationssystem eines Kraftfahrzeugs, das eine zentrale Recheneinheit, die mit einer Eingabe- und einer Ausgabeeinheit, Mitteln zur Positionsbestimmung sowie einem Speicherelement für Landkartendaten verbunden ist, und Mittel zur Zuordnung einer ermittelten Fahrzeugposition zu einem im Speicherelement abgelegten Datensatz der Landkartendaten enthält, **dadurch gekennzeichnet,** daß in dem Speicherelement (5) zu einem Datensatz der Landkartendaten gehörende Informationen zu Verkehrsbeschränkungen abgelegt sind und für die ermittelte Fahrzeugposition geltende Verkehrsbeschränkungen auf der Anzeigeeinheit (3; 19) anzeigbar sind.

2. Navigationssystem nach Anspruch 1, **dadurch gekennzeichnet,** daß es sich bei den Verkehrsbeschränkungen um Geschwindigkeitsbeschränkungen handelt.

3. Navigationssystem nach Anspruch 1, **dadurch gekennzeichnet,** daß es sich bei den Verkehrsbeschränkungen um Längen-, Breiten-, Höhen- oder Gewichtsbeschränkungen handelt.

4. Navigationssystem nach einem der vorhergehenden Ansprüche, **dadurch gekennzeichnet,** daß es sich um Verkehrsbeschränkungen für bestimmte Fahrzeugarten handelt.

5. Navigationssystem nach Anspruch 4, **dadurch gekennzeichnet,** daß die Fahrzeugart im Navigationssystem wählbar ist und nur die für die gewählte Fahrzeugart geltenden Verkehrsbeschränkungen angezeigt werden.

6. Navigationssystem nach einem der vorhergehenden Ansprüche, **dadurch gekennzeichnet,** daß es sich um zeitabhängige Verkehrsbeschränkungen handelt und die Information über die zeitliche Geltungsdauer der Verkehrsbeschränkungen im Speicherelement (5) abgelegt ist.

7. Navigationssystem nach Anspruch 6, **dadurch gekennzeichnet,** daß das Navigationssystem Mittel zur Zeitmessung enthält und nur die zur aktuellen Zeit gültigen Verkehrsbeschränkungen angezeigt werden.

8. Navigationssystem nach einem der vorhergehenden Ansprüche, **dadurch gekennzeichnet,** daß das Navigationssystem mit einem Mobiltelefon (22) verbindbar ist.

9. Navigationssystem nach Anspruch 8, **dadurch gekennzeichnet,** daß es sich um eine drahtlose Verbindung zwischen dem Navigationssystem und dem Mobiltelefon (22) handelt.

10. Navigationssystem nach einem der Ansprüche 8 oder 9, **dadurch gekennzeichnet,** daß die Informationen über Verkehrsbeschränkungen über das Mobiltelefon (22) von einer stationären Sendestation eines Mobilfunknetzes abrufbar und aktualisierbar sind.

11. Navigationssystem nach einem der Ansprüche 8 bis 10, **dadurch gekennzeichnet,** daß die Landkartendaten und die Informationen zu Verkehrsbeschränkungen über das Mobiltelefon (22) von einer stationären Sendestation eines Mobilfunknetzes abrufbar und in das Speicherelement übertragbar sind.

12. Navigationssystem nach einem der vorhergehenden Ansprüche, **dadurch gekennzeichnet,** daß die Informationen zu Verkehrsbeschränkungen bei einer Routenberechnung berücksichtigt werden.

13. Navigationssystem nach einem der vorhergehenden Ansprüche, **dadurch gekennzeichnet,** daß die Mittel zur Positionsbestimmung einen Empfänger für Satellitendaten (6) enthalten.

14. Navigationssystem nach einem der vorhergehenden Ansprüche, **dadurch gekennzeichnet,** daß die Positionsbestimmung durch Koppelnavigation erfolgt.

15. Navigationssystem nach einem der vorhergehenden Ansprüche, **dadurch gekennzeichnet,** daß das Navigationssystem eine akustische Ausgabeeinheit (4) enthält und die Ausgabe der Verkehrsbeschränkungen akustisch erfolgt.
